# EUROPÄISCHE PATENTSCHRIFT

(11) **EP 3 193 312 B1**
(45) Veröffentlichungstag und Bekanntmachung des Hinweises auf die Patenterteilung: **28.08.2019**
(21) Anmeldenummer: 16206248.3
(22) Anmeldetag: 22.12.2016
(51) Int. Cl.: G07C 3/08, G07C 9/00, G06K 7/10

(54) **SCHLÜSSELGERÄT MIT EINEM INTEGRIERTEN DRAHTLOSEN DATENLESER**
KEY DEVICE WITH AN INTEGRATED WIRELESS DATA READER
DISPOSITIF CLÉ AVEC UN LECTEUR DE DONNÉES SANS FIL INTÉGRÉ

(30) Priorität: 18.01.2016 DE 102016100691
(43) Veröffentlichungstag der Anmeldung: 19.07.2017
(73) Patentinhaber: Sick AG, 79183 Waldkirch (DE)
(72) Erfinder: Brunner, Fabio, 79100 Freiburg (DE)

(56) Entgegenhaltungen:
- EP-A1- 2 469 478
- US-A1- 2004 148 039
- US-A1- 2008 258 869
- US-A1- 2011 087 370
- US-A1- 2012 096 909
- US-A1- 2015 332 073

## Beschreibung

Die vorliegende Erfindung betrifft ein System mit einem mobilen Schlüsselgerät nach dem Oberbegriff von Anspruch 1 sowie ein Verfahren mit einem System nach dem Oberbegriff von Anspruch 6.

Eine Maschine oder Anlage besteht aus einer Vielzahl von elektrischen oder elektronischen Geräten, wie beispielsweise Sensoren, Aktoren, beispielsweise Ventile, Energieversorgungseinheiten, Bedieneinheiten, Anzeigeeinheiten oder Steuereinheiten.

Diese Geräte verfügen über wichtige Informationen zu einem Produktionsablauf bzw. zu einem Prozessablauf. Beispielsweise sind in den Geräten Informationen zu Ausfallzeiten, Stillstandzeiten oder Fehlermeldungen gespeichert. Diese Informationen sind meist nur lokal in den Geräten gespeichert.

Nach dem Stand der Technik sind derartige Geräte teilweise vernetzt, so dass die Geräte die Informationen an ein übergeordnetes System weiterleiten können. Hierzu muss jedoch jedes Gerät einen geeigneten Anschluss aufweisen und eine Vernetzung beispielsweise ein Bussystem muss zur Verfügung gestellt werden.

Die US 2011/0087370 A1 offenbart eine mobile elektronische Steuerungsvorrichtung, wie zum Beispiel ein elektronischer Schlüssel, der verwendet wird, um auf den Betrieb eines Feldgeräts zuzugreifen oder dieses anderweitig zu steuern. Bei einem Steuerungsereignis, bei dem das mobile Steuergerät über drahtgebundene oder drahtlose Kommunikation mit dem Feldgerät interagiert, erhält das Steuergerät den aktuellen Standort und eine Feldgeräte-ID. Die Kommunikation zwischen dem mobilen Steuergerät und dem Feldgerät kann verschlüsselt erfolgen. Die Standortinformation wird vom mobilen Steuergerät verwendet, um zu bestimmen, ob auf das Feldgerät zugegriffen werden soll oder ob es aktiviert werden soll. Darüber hinaus wird eine elektronische Zugangskontrollvorrichtung offenbart, die zwei Mikroprozessoren umfasst.

Die US 2012/0096909 A1 offenbart ein elektronisches Verriegelungssystem und - verfahren, das ein Schloss mit einem Verriegelungselement und mindestens einer Antenne umfasst. Eine Femstromquelle treibt die Verriegelung an, um das Verriegelungselement unter Verwendung der Induktionstechnologie zu betätigen.

Die US 2004/0148039 A1 offenbart ein Verfahren und eine Vorrichtung zum Steuern von Maschinenoperationen in einer automatisierten Industrieanlage, die mindestens eine Maschine umfasst, wobei das Verfahren zum Einschränken der Maschinenoperation umfasst, wenn sich ein drahtloses Informationsgerät, das einem Anlagenbenutzer zugeordnet ist, an einem Ort mit eingeschränkter Einrichtung befindet und die Schritte umfasst, die mindestens eine drahtlose Einrichtung bereitstellen, zu bestimmen, ob sich die mindestens eine drahtlose Informationsvorrichtung innerhalb eines beschränkten Einrichtungsstandortes befindet und, wenn sich die mindestens eine drahtlose Informationsvorrichtung innerhalb eines beschränkten Einrichtungsortes befindet, den Betrieb der mindestens einen Maschine reguliert.

Die EP 2 469 478 A1 offenbart ein Verfahren zum Steuern des Zugriffs in einem Standortverfolgungssystem. In Reaktion auf das Erkennen des Vorhandenseins eines mobilen Tags des Standortverfolgungssystems in einem Bereich, der mindestens eine Zugriffssteuerungsvorrichtung umfasst, aktiviert eine Standortverfolgungsvorrichtung des Standortverfolgungssystems die Zugriffssteuerungsvorrichtung, um den Aufbau einer Kommunikationsverbindung für das mobile Tag zu initiieren, um Zugriffsrechte des mobilen Tags einzuleiten.

Eine Aufgabe der Erfindung besteht daher darin, Informationen einzelner Geräte einem übergeordneten System bereitzustellen, ohne dass die Geräte miteinander vernetzt werden müssen.

Die Aufgabe wird gemäß Anspruch 1 gelöst durch ein Sicherheitssystem.

Die Aufgabe wird weiter gelöst mit einem Verfahren in einem Sicherheitssystem gemäß Anspruch 6.

Bei dem System kann es sich beispielsweise um ein Sicherheitssystem handeln, beispielsweise um ein Sicherheitssystem gemäß Maschinensicherheit, beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt.

Das Schlüsselgerät gemäß der Erfindung kann sehr einfach ausgebildet sein. Es handelt sich beispielsweise um ein handliches Schlüsselgerät, das problemlos von einer Person getragen bzw. mitgeführt werden kann. Optional weist das Schlüsselgerät Bedienelemente und mindestens ein Anzeigeelement auf.

Weiter weist das Schlüsselgerät eine Auswerteeinheit auf. Die Auswerteeinheit ist beispielsweise durch einen Mikrocontroller gebildet. Weiter weist das Schlüsselgerät einen Speicher auf, um Daten auf dem Schlüsselgerät abzuspeichern.

Die Schlüsselstation ist außerhalb des Sicherheitsbereiches angeordnet. Die Schlüsselstation nimmt das mindestens eine Schlüsselgerät in einer Aufnahme auf. Bei der Aufnahme kann es sich beispielsweise um ein Fach oder ein Steckfach handeln. Die Schlüsselstation ist dazu ausgebildet, das Schlüsselgerät auszulesen und die Daten des Schlüsselgerätes in einer Auswerteeinheit auszuwerten bzw. an ein ERP-System weiterzuleiten.

Der Zugangsbereich ist ein räumlich begrenzter Zugangsbereich mit einer Zugangsstation beispielsweise ein Tor oder eine Tür. Nur durch diesen Zugangsbereich ist der Sicherheitsbereich der Anlage zugänglich. Es können auch mehrere Zugangsbereiche angeordnet sein. Gerade bei sehr großen Anlagen mit beispielsweise mehreren Sicherheitsbereichen kann dies sinnvoll sein.

Die Zugangsstation kann beispielsweise elektronische Mittel wie beispielsweise einen elektronischen Türschalter aufweisen, wodurch überprüfbar ist, ob der Zugangsbereich geöffnet wurde.

Bei der Anlage kann es sich beispielsweise um eine Industrieanlage zur Herstellung von Produkten handeln. Beispielsweise handelt es sich hierbei um einen Teil einer Produktionsanlage für Automobile. Bei der Anlage kann es sich auch um einen Teil einer Maschine oder um eine Anlage mit mehreren Maschinen handeln. Die Anlage weist einen Sicherheitsbereich auf, der nicht von Personen betreten werden darf, wenn die Anlage aktiv ist, da die Person durch Teile der Anlage gefährdet werden kann. Beispielsweise handelt es sich bei der Anlage um einen oder mehrere Roboter, deren gefährlicher Wirkungsbereich innerhalb des Sicherheitsbereiches liegt.

Das mindestens eine externe Gerät ist innerhalb des Sicherheitsbereiches angeordnet. Das oder die Geräte sind beispielsweise ortsfest angeordnet, so dass diese nicht entfernt werden können. Es kann sich aber auch um mobile Geräte handeln. Das Gerät ist beispielsweise in der Anlage integriert.

Das Gerät enthält mindestens Daten zur Identifizierung, die über eine Schnittstelle drahtlos von dem Schlüsselgerät abgerufen werden können. Bei der Schnittstelle handelt es sich bevorzugt um eine Funkschnittstelle. Optional kann es sich bei der Schnittstelle jedoch auch um eine optische Schnittstelle handeln.

Bei dem Gerät kann es sich beispielsweise um ein Ventil, einen Aktor, einen Sensor oder ein sonstiges elektrisches bzw. elektronisches Gerät handeln. Neben den Daten zur Identifizierung werden Daten zum Gerätestatus und/oder Gerätedaten an das Schlüsselgerät übertragen. Dabei kann es sich um Betriebsdaten, Prozessdaten oder ähnliche Daten handeln. Beispielsweise handelt es sich bei den Daten zum Gerätestatus um Fehlermeldungen oder um Daten zum Betriebsverhalten, beispielsweise Ausfallzeiten des Gerätes. Beispielsweise handelt es sich um Druckwerte eines Ventils.

Gemäß der Erfindung wird das Schlüsselgerät von der Person mitgeführt, um die Geräte zu erreichen. Während die Person das Schlüsselgerät mit sich führt, kann die Anlage auch nicht wieder aktiviert werden.

Das Abrufen von Daten durch das Schlüsselgerät an dem Gerät kann automatisch erfolgen. D. h. wenn sich die Person dem Gerät auf einen bestimmten Mindestabstand genähert hat, werden die Daten des Geräts automatisch von dem Schlüsselgerät gelesen.

Die Person, die das Schlüsselgerät mit sich führt, kann optional mit dem Schlüsselgerät selbst von dem Gerät die Daten abrufen. Dazu kann beispielsweise vorgesehen sein, dass von der Person beispielsweise eine Aktion, beispielsweise ein Betätigen einer Taste an dem Schlüsselgerät durchgeführt werden muss. Dadurch ist gewährleistet, dass die Daten des Geräts durch das Schlüsselgerät nicht automatisch abgerufen werden, sondern immer eine aktive Handlung der Person notwendig ist, um die Daten abzurufen.

Das Gerät kann beispielsweise sehr einfach ausgeführt sein, um die Daten bereitzustellen. Das Gerät benötigt im einfachsten Fall zusätzlich einen Speicher und eine Schnittstelle zur Datenbereitstellung.

Gewöhnlich sind eine Vielzahl von Geräten vorhanden. Insbesondere bei großen Anlagen bzw. großen Sicherheitsbereichen bzw. große Anlagen mit einer Mehrzahl von Sicherheitsbereichen sind mehrere Geräte vorhanden. Dabei kann vorgesehen sein, dass das Schlüsselgerät mindestens Daten eines Gerätes abruft. Jedoch ist insbesondere vorgesehen, dass ein Schlüsselgerät an mehreren Geräten Daten abruft. Insbesondere ist es vorgesehen, dass das Schlüsselgerät an mehreren Geräten in einer bestimmten Reihenfolge Daten abruft.

Die Kommunikation zwischen dem Schlüsselgerät und dem Gerät kann unidirektional oder bidirektional stattfinden. Im einfachsten Fall genügt ein einfaches Lesen der Daten des Gerätes. Jedoch kann es auch vorgesehen sein, dass von dem Schlüsselgerät Daten in das Gerät geschrieben werden.

Gemäß der Erfindung ist es vorgesehen, dass die Schlüsselgeräte nur von autorisierten Personen aus der Schlüsselstation entnommen werden können. Beispielsweise müssen sich die autorisierten Personen wie Bedienpersonen oder Servicepersonen mit Hilfe einer elektronischen Identitätskarte oder mit Hilfe anderer Identifikationsmittel an der Schlüsselstation anmelden um ein Schlüsselgerät zu erhalten. Bei der Entnahme des Schlüsselgerätes wird beispielsweise von der Schlüsselstation eine Startkennung an das Schlüsselgerät gesendet.

Die Schlüsselgeräte können dabei auch bestimmten Personen zugewiesen sein, so dass ein bestimmtes Schlüsselgerät nur von einer bestimmten Person aufgenommen bzw. mitgenommen werden kann.

In Weiterbildung der Erfindung weist das Schlüsselgerät ein RFID-Lesegerät auf, um RFID-Signale von den externen Geräten zu lesen, wobei die externen Geräte RFID-Signale bereitstellen.

In Weiterbildung der Erfindung weist das externe Gerät jeweils mindestens einen RFID-Transponder auf.

Die Geräte sind dadurch sehr einfach ausgeführt, nämlich nur zusätzlich mit einem einfachen, preiswerten RFID-Transponder.

Das RFID-Lesegerät weist eine Antennenanordnung zur Kommunikation mit dem Gerät auf, welches einen RFID-Transponder aufweist, wobei der RFID-Transponder mindestens eine Spule zur Wechselwirkung mit der Antennenanordnung des RFID-Lesergeräts umfasst.

RFID-Systeme (Radio Frequency Identification) werden in Sender/Empfänger-Systemen zum automatischen und berührungslosen Identifizieren und/oder Lokalisieren von RFID-Transpondern mit Radiowellen verwendet. Ein RFID-System umfasst typischerweise zunächst den RFID-Transponder (auch als "Tag" oder "Funketikett" bezeichnet), der eine Antenne umfasst und sich am oder in dem Gerät befindet. Er umfasst in der Regel einen kennzeichnenden Identifizierungsdaten-Code, der über die Antennenanordnung von dem RFID-Lesegerät des RFID-Systems (auch als "Transceiver" bezeichnet) abgefragt werden kann. Das RFID-Lesegerät umfasst dazu die Antennenanordnung und einen Transceiverschaltkreis (z.B. der EM4095-Chip der Firma EM Microelectronics) zum Auslesen dieser Kennung von dem RFID-Transponder. Zum Auslesen der Kennung von dem RFID-Transponder erzeugt das RFID-Lesegerät typischerweise magnetische Wechselfelder, um Signale an den RFID-Transponder zu übertragen. Der RFID-Transponder ist dazu ausgebildet, nach Erhalt eines entsprechenden Signals vom RFID-Lesegerät ein Daten, insbesondere die Kennung, umfassendes Signal als Antwort an das RFID-Lesegerät zurückzusenden, welches dieses mit der Auswerteeinheit auswertet und weiterverarbeitet.

Bei RFID-Systemen erzeugt das RFID-Lesegerät magnetische Wechselfelder, die nicht nur zum Übertragen der Daten vorgesehen sind, sondern auch dazu dienen können, den RFID-Transponder mit Energie zu versorgen.

Ein RFID-System hat damit den Vorteil, dass der RFID-Transponder keine eigene Stromversorgung benötigt und daher flexibel eingesetzt werden kann. Der RFID-Transponder bezieht seine Energie über Funkwellen bzw. Radiowellen aus dem RFID-Lesegerät. Der RFID-Transponder wird über die Antennenanordnung des RFID-Lesegeräts angesprochen und antwortet dem RFID-Lesegerät mit einer in dem RFID-Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, nämlich die Identifizierungsdaten, die den RFID-Transponder identifiziert.

Da die Erkennung des RFID-Transponders über Funkwellen erfolgt, ist das System sehr robust gegenüber Umwelteinflüssen. Daher kann das RFID-Lesesystem mit dem RFID-Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des RFID-Transponders über Funkwellen erfolgt, ist im Unterschied zu einer optischen Lösung keine Sichtverbindung zwischen dem Schlüsselgerät und dem Gerät notwendig. Daher kann das Schlüsselgerät und das Gerät vollständig gekapselt werden, um diese vor schädlichen Umwelteinflüssen zu schützen.

Weiter ist die Zugangsstation des Zugangsbereichs beispielsweise verriegelbar und nur mit dem Schlüsselgerät passierbar.

Dadurch wird ein unbefugter Zugang verhindert und nur eine zulässige Person, welche nämlich im Besitz des Schlüsselgerätes ist, kann den Sicherheitsbereich betreten.

Dadurch wird die Sicherheit für Personen erhöht, da der Sicherheitsbereich nicht mehr unabsichtlich betreten werden kann. Dadurch wird auch eine Verfügbarkeit der Anlage erhöht. Beispielsweise befindet sich an der Zugangsstation eine elektronische Zuhaltung als Verriegelung, die den Zugangsbereich automatisch freigibt, falls die Person das Schlüsselgerät mit sich führt.

In Weiterbildung der Erfindung ist die Zugangsstation mit einem ERP-System verbunden.

Ein Enterprise-Resource-Planning-System (ERP) bezeichnet ein System, das die unternehmerische Aufgabe hat, Ressourcen wie Kapital, Personal, Betriebsmittel, Material, Informations- und Kommunikationstechnik, IT-Systeme im Sinne des Unternehmenszwecks rechtzeitig und bedarfsgerecht zu planen und zu steuern. Gewährleistet werden sollen ein effizienter betrieblicher Wertschöpfungsprozess und eine stetig optimierte Steuerung der unternehmerischen und betrieblichen Abläufe.

Eine Kernfunktion von ERP-Systemen ist in produzierenden Unternehmen beispielsweise die Materialbedarfsplanung, die sicherstellen muss, dass alle für die Herstellung der Erzeugnisse und Komponenten erforderlichen Materialien an der richtigen Stelle, zur richtigen Zeit und in der richtigen Menge zur Verfügung stehen.

Ein ERP-System ist ein komplexes System, beispielsweise eine Vielzahl von miteinander kommunizierender Anwendungssoftware bzw. IT-Systemen, die zur Unterstützung der Ressourcenplanung des gesamten Unternehmens eingesetzt werden. Komplexe ERP-Systeme werden häufig in Teil-Systeme beispielsweise Anwendungs-Module aufgeteilt, die je nach Unternehmensbedarf miteinander kombiniert werden können.

In Weiterbildung der Erfindung weisen die Daten eine Zeitangabe auf. Dadurch ist gewährleistet, wann die Daten in dem Gerät entstanden sind. Dadurch können die Daten zeitlich nacheinander sortiert und entsprechend ausgewertet werden.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

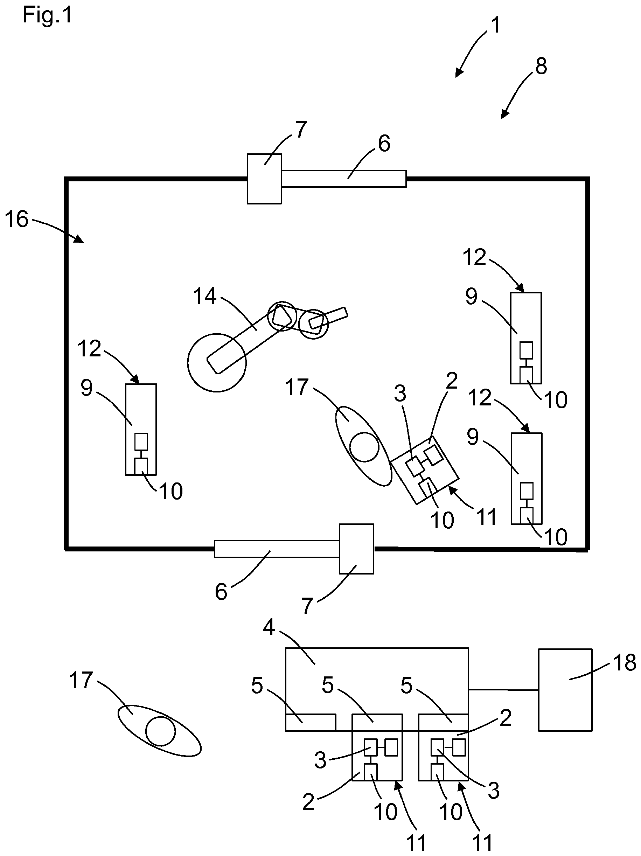

- Figur 1: ein System mit einem mobilen Schlüsselgerät.

In der nachfolgenden Figur sind identische Teile mit identischen Bezugszeichen versehen.

Figur 1 zeigt ein System 1 mit einem mobilen Schlüsselgerät 2 zum Lesen von Daten von mindestens einem externen Gerät 9 einer Anlage 8, wobei die Daten Identifizierungsdaten für das zu überprüfende Gerät 9 umfassen und wobei das mobile Schlüsselgerät 2 eine Schnittstelle 10 aufweist, mittels der die Daten drahtlos von dem Gerät zu dem Schlüsselgerät übertragbar sind.

Weiter ist mindestens ein begrenzter Zugangsbereich 6 mit einer Zugangsstation 7 angeordnet, wobei das Gerät 2 nur über den Zugangsbereich 6 zugänglich ist, so dass der Zugangsbereich 6 von einer Person 17 mit dem Schlüsselgerät 2 vor dem Lesen des Gerätes 9 und nach dem Lesen des Gerätes 9 passiert werden muss, wobei die Daten des Schlüsselgeräts 2 an eine Schlüsselstation 4 übertragbar sind.

Bei dem Schlüsselgerät 2 handelt es sich beispielsweise um ein handliches Schlüsselgerät 2, das problemlos von einer Person 17 getragen bzw. mitgeführt werden kann. Optional weist das Schlüsselgerät 2 Bedienelemente und mindestens ein Anzeigeelement auf.

Weiter weist das Schlüsselgerät 2 eine Auswerteeinheit 3 auf. Die Auswerteeinheit 3 ist beispielsweise durch einen Mikrocontroller gebildet. Weiter weist das Schlüsselgerät 2 einen Speicher auf, um Daten auf dem Schlüsselgerät 2 abzuspeichern.

Die Schlüsselstation 4 ist außerhalb des Sicherheitsbereiches 16 angeordnet. Die Schlüsselstation 4 nimmt das mindestens eine Schlüsselgerät 2 in einer Aufnahme 5 auf. Bei der Aufnahme 5 kann es sich beispielsweise um ein Fach oder ein Steckfach handeln. Die Schlüsselstation 4 ist dazu ausgebildet, das Schlüsselgerät 2 auszulesen und die Daten des Schlüsselgerätes 2 in einer Auswerteeinheit auszuwerten bzw. an ein ERP-System 18 weiterzuleiten.

Der Zugangsbereich 6 ist ein räumlich begrenzter Zugangsbereich 6 mit einer Zugangsstation 7 beispielsweise ein Tor oder eine Tür. Nur durch diesen Zugangsbereich 6 ist der Sicherheitsbereich 16 der Anlage 8 zugänglich. Es können auch mehrere Zugangsbereiche 6 angeordnet sein. Gerade bei sehr großen Anlagen 8 mit beispielsweise mehreren Sicherheitsbereichen 16 kann dies sinnvoll sein.

Die Zugangsstation 7 kann beispielsweise elektronische Mittel wie beispielsweise einen elektronischen Türschalter aufweisen, wodurch überprüfbar ist, ob der Zugangsbereich geöffnet wurde.

Bei der Anlage 8 kann es sich beispielsweise um eine Industrieanlage zur Herstellung von Produkten handeln. Bei der Anlage 8 kann es sich auch um einen Teil einer Maschine oder um eine Anlage 8 mit mehreren Maschinen handeln. Die Anlage 8 weist einen Sicherheitsbereich 16 auf, der nicht von Personen 17 betreten werden darf, wenn die Anlage 8 aktiv ist, da die Person 17 durch Teile der Anlage 8 gefährdet werden kann. Beispielsweise handelt es sich bei der Anlage 8 um einen oder mehrere Roboter 14, deren gefährlicher Wirkungsbereich innerhalb des Sicherheitsbereiches 16 liegt.

Das mindestens eine externe Gerät 9 ist innerhalb des Sicherheitsbereiches 16 angeordnet. Das oder die Geräte 9 sind beispielsweise ortsfest angeordnet, so dass diese nicht entfernt werden können. Es kann sich aber auch um mobile Geräte 9 handeln. Das Gerät 9 ist beispielsweise in der Anlage 8 integriert.

Das Gerät 9 enthält mindestens Daten zur Identifizierung, die über eine Schnittstelle 10 drahtlos von dem Schlüsselgerät 2 abgerufen werden können. Bei der Schnittstelle 10 handelt es sich bevorzugt um eine Funkschnittstelle. Optional kann es sich bei der Schnittstelle 10 jedoch auch um eine optische Schnittstelle handeln.

Bei dem Gerät 9 kann es sich beispielsweise um ein Ventil, einen Aktor, einen Sensor oder ein sonstiges elektrisches bzw. elektronisches Gerät handeln. Neben den Daten zur Identifizierung werden Daten zum Gerätestatus und/oder Gerätedaten an das Schlüsselgerät 2 übertragen. Dabei kann es sich um Betriebsdaten, Prozessdaten oder ähnliche Daten handeln. Beispielsweise handelt es sich bei den Daten zum Gerätestatus um Fehlermeldungen oder um Daten zum Betriebsverhalten, beispielsweise Ausfallzeiten des Gerätes 9.

Gemäß Figur 1 wird das Schlüsselgerät 2 von der Person 17 mitgeführt, um die Geräte 9 zu erreichen. Während die Person 17 das Schlüsselgerät 2 mit sich führt, kann die Anlage 8 auch nicht wieder aktiviert werden.

Das Abrufen von Daten durch das Schlüsselgerät 2 an dem Gerät 9 kann automatisch erfolgen. D. h. wenn sich die Person 17 dem Gerät 9 auf einen bestimmten Mindestabstand genähert hat, werden die Daten des Geräts 9 automatisch von dem Schlüsselgerät 2 gelesen.

Die Person 17, die das Schlüsselgerät 2 mit sich führt, kann optional mit dem Schlüsselgerät 2 selbst von dem Gerät 9 die Daten abrufen. Dazu kann beispielsweise vorgesehen sein, dass von der Person 17 beispielsweise eine Aktion, beispielsweise ein Betätigen einer Taste an dem Schlüsselgerät 2 durchgeführt werden muss. Dadurch ist gewährleistet, dass die Daten des Geräts 9 durch das Schlüsselgerät 2 nicht automatisch abgerufen werden, sondern immer eine aktive Handlung der Person 17 notwendig ist, um die Daten abzurufen.

Das Gerät 9 kann beispielsweise sehr einfach ausgeführt sein, um die Daten bereitzustellen. Das Gerät 9 benötigt im einfachsten Fall zusätzlich lediglich einen Speicher und eine Schnittstelle 10 zur Datenbereitstellung.

Gewöhnlich sind eine Vielzahl von Geräten 9 vorhanden. Insbesondere bei großen Anlagen 8 bzw. großen Sicherheitsbereichen 16 bzw. große Anlagen 8 mit einer Mehrzahl von Sicherheitsbereichen 16 sind mehrere Geräte 9 vorhanden. Dabei kann vorgesehen sein, dass das Schlüsselgerät 2 mindestens Daten eines Gerätes 9 abruft. Jedoch ist insbesondere vorgesehen, dass das Schlüsselgerät 2 an mehreren Geräten 9 Daten abruft. Insbesondere ist es vorgesehen, dass das Schlüsselgerät 2 an mehreren Geräten 9 in einer bestimmten Reihenfolge Daten abruft.

Die Kommunikation zwischen dem Schlüsselgerät 2 und dem Gerät 9 kann unidirektional oder bidirektional stattfinden. Im einfachsten Fall genügt ein einfaches Lesen der Daten des Gerätes 9. Jedoch kann es auch vorgesehen sein, dass von dem Schlüsselgerät 2 Daten in das Gerät 9 geschrieben werden.

Optional ist es vorgesehen, dass die Schlüsselgeräte 2 nur von autorisierten Personen aus der Schlüsselstation 4 entnommen werden können. Beispielsweise müssen sich die autorisierten Personen 17 wie Bedienpersonen oder Servicepersonen mit Hilfe einer elektronischen Identitätskarte oder mit Hilfe anderer Identifikationsmitteln an der Schlüsselstation 4 anmelden, um ein Schlüsselgerät 2 zu erhalten. Bei der Entnahme des Schlüsselgerätes 2 wird beispielsweise von der Schlüsselstation 4 eine Startkennung an das Schlüsselgerät 2 gesendet.

Die Schlüsselgeräte 2 können dabei auch bestimmten Personen 17 zugewiesen sein, so dass ein bestimmtes Schlüsselgerät 2 nur von einer bestimmten Person 17 aufgenommen bzw. mitgenommen werden kann.

Gemäß Figur 1 weist das Schlüsselgerät 2 ein RFID-Lesegerät 11 auf, um RFID-Signale von den externen Geräten 9 zu lesen, wobei die externen Geräte 9 RFID-Signale bereitstellen. Das externe Gerät 9 weist jeweils mindestens einen RFID-Transponder 12 auf.

Weiter ist die Zugangsstation 7 des Zugangsbereichs 6 beispielsweise verriegelbar und nur mit dem Schlüsselgerät 2 passierbar.

Gemäß Figur 1 ist die Schlüsselstation mit einem ERP-System 18 verbunden.

Weiter weisen die Daten eine Zeitangabe auf. Dadurch ist gewährleistet, wann die Daten in dem Gerät 9 entstanden sind. Dadurch können die Daten zeitlich nacheinander sortiert und entsprechend ausgewertet werden.

### Bezugszeichen:

1 System
2 mobiles Schlüsselgerät
3 Auswerteeinheit
4 Schlüsselstation
5 Aufnahme
6 Zugangsbereich
7 Zugangsstation
8 Anlage
9 Gerät
10 Schnittstelle
11 RFID-Lesegerät
12 RFID-Transponder
14 Roboter
16 Sicherheitsbereich
17 Person
18 ERP-System

## Patentansprüche

1. Sicherheitssystem mit einer Anlage (8), die einen Sicherheitsbereich (16) aufweist, und einem elektronischen Gerät (9), einer Schlüsselstation (4) und einem mobilen Schlüsselgerät (2) zum Lesen von Daten von mindestens dem elektronischen Gerät (9) der Anlage (8),wobei der Sicherheitsbereich (16) innerhalb der Anlage angeordnet ist und das elektronische Gerät (9) innerhalb des Sicherheitsbereichs angeordnet ist, wobei die Daten mindestens Identifizierungsdaten für das elektronische Gerät (9) umfassen und wobei das mobile Schlüsselgerät (2) eine Schnittstelle (10) aufweist, mittels der die Daten drahtlos von dem elektronischen Gerät (9) zu dem Schlüsselgerät (2) übertragbar sind,
wobei
mindestens ein begrenzter Zugangsbereich (6) mit einer Zugangsstation (7) zum Sicherheitsbereich (16) angeordnet ist, wobei die Zugangsstation eine Verriegelung aufweist, die verriegelbar ist, und die Zugangsstation nur mit dem Schlüsselgerät passierbar ist, wobei nur durch diesen mindestens einen Zugangsbereich (6) der Sicherheitsbereich der Anlage (8) und das im Sicherheitsbereich angeordnete elektronische Gerät (9) zugänglich sind, **wobei** ein Zugangsbereich (6) von einer Person (17) mit dem Schlüsselgerät (2) vor dem Lesen des elektronischen Gerätes (9) und nach dem Lesen des elektronischen Gerätes (9) passiert werden muss, wobei die Daten des Schlüsselgeräts (2) an eine Schlüsselstation (4) übertragbar sind, **dadurch gekennzeichnet, dass** die Schlüsselstation außerhalb des Sicherheitsbereiches angeordnet ist und die Schlüsselstation dazu ausgebildet ist, das mindestens eine Schlüsselgerät in einer Aufnahme aufzunehmen, das Schlüsselgerät auszulesen und die Daten des Schlüsselgerätes in einer Auswerteeinheit auszuwerten, wobei das Schlüsselgerät nur von autorisierten Personen aus der Schlüsselstation entnehmbar ist, wobei der Sicherheitsbereich nicht von Personen betreten werden darf, wenn die Anlage aktiv ist, wobei die Anlage nicht aktiviert werden kann, während die Person das Schlüsselgerät mit sich führt.

2. Sicherheitssystem nach Anspruch 1, **dadurch gekennzeichnet, dass** das Schlüsselgerät (2) ein RFID-Lesegerät (11) aufweist, um RFID-Signale von dem elektronischen Gerät (9) zu lesen, wobei das elektronische Gerät (9) RFID-Signale bereitstellt.

3. Sicherheitssystem nach mindestens einem der vorhergehenden Ansprüche, **dadurch gekennzeichnet, dass** das elektronische Gerät (9) jeweils mindestens einen RFID-Transponder (12) aufweist.

4. Sicherheitssystem nach mindestens einem der vorhergehenden Ansprüche, **dadurch gekennzeichnet, dass** die Schlüsselstation (4) mit einem ERP-System (18) verbunden ist.

5. Sicherheitssystem nach mindestens einem der vorhergehenden Ansprüche, **dadurch gekennzeichnet, dass** die Daten eine Zeitangabe aufweisen.

6. Verfahren in einem Sicherheitssystem (1) mit einem elektronischen Gerät (9), mit einer Anlage (8), die einen Sicherheitsbereich (16) aufweist, einer Schlüsselstation (4) und mit einem mobilen Schlüsselgerät (2) zum Lesen von Daten von mindestens dem elektronischen Gerät (9) der Anlage (8), wobei der Sicherheitsbereich (16) innerhalb der Anlage angeordnet ist und das elektronische Gerät innerhalb des Sicherheitsbereiches angeordnet ist, wobei die Daten mindestens Identifizierungsdaten für das elektronische Gerät (9) umfassen und wobei das mobile Schlüsselgerät (2) eine Schnittstelle (10) aufweist, mittels der die Daten drahtlos von dem elektronischen Gerät (9) zu dem Schlüsselgerät (2) übertragen werden,
wobei
mindestens ein begrenzter Zugangsbereich (6) mit einer Zugangsstation (7) zum Sicherheitsbereich (16) angeordnet ist, wobei die Zugangsstation eine Verriegelung aufweist, die verriegelbar ist, und die Zugangsstation nur mit dem Schlüsselgerät passierbar ist, wobei nur durch diesen mindestens einen Zugangsbereich (6) der Sicherheitsbereich der Anlage (8) und das im Sicherheitsbereich angeordnete elektronische Gerät (9) zugänglich sind, **wobei** ein Zugangsbereich (6) von einer Person (17) mit dem Schlüsselgerät (2) vor dem Lesen des elektronischen Gerätes (9) und nach dem Lesen des elektronischen Gerätes (9) passiert wird, wobei die Daten des Schlüsselgeräts (2) an die Schlüsselstation (4) übertragen werden, **dadurch gekennzeichnet, dass** die Schlüsselstation außerhalb des Sicherheitsbereiches angeordnet ist und die Schlüsselstation das mindestens eine Schlüsselgerät in einer Aufnahme aufnimmt, wobei die Schlüsselstation dazu ausgebildet ist, das Schlüsselgerät auszulesen und die Daten des Schlüsselgerätes in einer Auswerteeinheit auszuwerten, wobei das Schlüsselgerät nur von autorisierten Personen aus der Schlüsselstation entnommen werden kann, wobei der Sicherheitsbereich nicht von Personen betreten werden darf, wenn die Anlage aktiv ist, wobei die Anlage nicht aktiviert werden kann, während die Person das Schlüsselgerät mit sich führt.

7. Verfahren nach Anspruch 6, **dadurch gekennzeichnet, dass** das Schlüsselgerät (2) ein RFID-Lesegerät (11) aufweist, um RFID-Signale von dem elektronischen Gerät (9) zu lesen, wobei das elektronische Gerät (9) RFID-Signale bereitstellt.

## Claims

1. A safety system having a facility (8) that has a safety zone (16) and having an electronic device (9), a key station (4), and a mobile key device (2) for reading data from at least the electronic device (9) of the facility (8), wherein the safety zone (16) is arranged within the facility and the electronic device (9) is arranged within the safety zone; wherein the data at least comprise identification data for the electronic device (9); and wherein the mobile key device (2) comprises an interface (10) by means of which the data are wirelessly transferable from the electronic device (9) to the key device (2); wherein
at least one restricted access zone (6) having an access station (7) to the safety zone (16) is arranged, wherein the access station has a locking device that is lockable and the access station can only be passed using the key device, wherein the safety zone of the facility (8) and the electronic device (9) arranged in the safety zone are only accessible through this at least one access zone (6); wherein
an access zone (6) has to be passed through by a person (17) having the key device (2) before the reading of the electronic device (9) and after the reading of the electronic device (9), with the data of the key device (2) being transferable to a key station (4),
**characterized in that** the key station is arranged outside the safety zone and the key station is configured to receive the at least one key device in a receiver, to read the key device, and to evaluate the data of the key device in an evaluation unit, with the key device only being removable from the key station by authorized persons, with the safety zone not being allowed to be entered by persons when the facility is active, and with the facility not being able to be activated while the person carries the key device with him.

2. A safety system in accordance with claim 1, **characterized in that** the key device (2) has an RFID reading device (11) to read RFID signals from the electronic device (9), with the electronic device (9) providing RFID signals.

3. A safety system in accordance with at least one of the preceding claims, **characterized in that** the electronic device (9) respectively comprises at least one RFID transponder (12).

4. A safety system in accordance with at least one of the preceding claims, **characterized in that** the key station (4) is connected to an ERP system (18).

5. A safety system in accordance with at least one of the preceding claims, **characterized in that** the data comprise a time indication.

6. A method in a safety system (1) having an electronic device (9), having a facility (8) that has a safety zone (16), having a key station (4), and having a mobile key device (2) for reading data from at least the electronic device (9) of the facility (8), wherein the safety zone (16) is arranged within the facility and the electronic device (9) is arranged within the safety zone; wherein the data at least comprise identification data for the electronic device (9); and wherein the mobile key device (2) comprises an interface (10) by means of which the data are wirelessly transferable from the electronic device (9) to the key device (2);
wherein
at least one restricted access zone (6) having an access station (7) to the safety zone (16) is arranged, wherein the access station has a locking device that is lockable and the access station can only be passed using the key device, wherein the safety zone of the facility (8) and the electronic device (9) arranged in the safety zone are only accessible through this at least one access zone (6); wherein
an access zone (6) is passed through by a person (17) having the key device (2) before the reading of the electronic device (9) and after the reading of the electronic device (9), with the data of the key device (2) being transferable to a key station (4), **characterized in that** the key station is arranged outside the safety zone and the key station receives the at least one key device in a receiver, with the key station being configured to read the key device and to evaluate the data of the key device in an evaluation unit, with the key device only being removable from the key station by authorized persons, with the safety zone not being allowed to be entered by persons when the facility is active, and with the facility not being able to be activated while the person carries the key device with him.

7. A method in accordance with claim 6, **characterized in that** the key device (2) has an RFID reading device (11) to read RFID signals from the electronic device (9), with the electronic device (9) providing RFID signals.

## Revendications

1. Système de sécurité comprenant une installation (8) pourvue d'une zone de sécurité (16) et un appareil électronique (9), une station clé (4) et un appareil clé (2) mobile pour lire des données au moins de l'appareil électronique (9) de l'installation (8), dans lequel la zone de sécurité (16) est disposée à l'intérieur de l'installation et l'appareil électronique (9) est disposé à l'intérieur de la zone de sécurité, les données comprennent au moins des données d'identification pour l'appareil électronique (9), et l'appareil clé mobile (2) présente une interface (10) à l'aide de laquelle les données peuvent être transmises sans fil de l'appareil électronique (9) à l'appareil clé (2), il est prévu au moins une zone d'accès limitée (6) comportant une station d'accès (7) à la zone de sécurité (16), la station d'accès présente un verrouillage qui est verrouillable, et la station d'accès ne peut être franchie qu'avec l'appareil clé, la zone de sécurité de l'installation (8) et l'appareil électronique (9) disposé dans la zone de sécurité n'étant accessibles que par ladite au moins une zone d'accès (6), une zone d'accès (6) doit être franchie par une personne (17) avec l'appareil clé (2) avant la lecture de l'appareil électronique (9) et après la lecture de l'appareil électronique (9), les données de l'appareil clé (2) peuvent être transmises à une station clé (4),
**caractérisé en ce que**
la station clé est disposée à l'extérieur de la zone de sécurité et la station clé est réalisée pour recevoir ledit au moins un appareil clé dans un logement, pour lire l'appareil clé et pour évaluer les données de l'appareil clé dans une unité d'évaluation, l'appareil clé ne peut être retiré de la station clé que par des personnes autorisées, la zone de sécurité ne doit pas être pénétrée par des personnes lorsque l'installation est active, l'installation ne pouvant pas être activée pendant que la personne porte l'appareil clé sur elle.

2. Système de sécurité selon la revendication 1, **caractérisé en ce que** l'appareil clé (2) présente un appareil de lecture RFID (11) pour lire des signaux RFID de l'appareil électronique (9), l'appareil électronique (9) fournissant des signaux RFID.

3. Système de sécurité selon l'une au moins des revendications précédentes, **caractérisé en ce que** l'appareil électronique (9) présente au moins un transpondeur RFID (12) respectif.

4. Système de sécurité selon l'une au moins des revendications précédentes, **caractérisé en ce que** la station clé (4) est connectée à un système PGI (progiciel de gestion intégré) (18).

5. Système de sécurité selon l'une au moins des revendications précédentes, **caractérisé en ce que** les donnés présentent une indication temporelle.

6. Procédé dans un système de sécurité (1) comprenant un appareil électronique (9), une installation (8) pourvue d'une zone de sécurité (16), une station clé (4) et un appareil clé (2) mobile pour lire des données au moins de l'appareil électronique (9) de l'installation (8), dans lequel la zone de sécurité (16) est disposée à l'intérieur de l'installation et l'appareil électronique est disposé à l'intérieur de la zone de sécurité, les données comprennent au moins des données d'identification pour l'appareil électronique (9), et l'appareil clé mobile (2) présente une interface (10) à l'aide de laquelle les données sont transmises sans fil de l'appareil électronique (9) à l'appareil clé (2), il est prévu au moins une zone d'accès limitée (6) comportant une station d'accès (7) à la zone de sécurité (16), la station d'accès présente un verrouillage qui est verrouillable, et la station d'accès ne peut être franchie qu'avec l'appareil clé, la zone de sécurité de l'installation (8) et l'appareil électronique (9) disposé dans la zone de sécurité n'étant accessibles que par ladite au moins une zone d'accès (6), une zone d'accès (6) est franchie par une personne (17) avec l'appareil clé (2) avant la lecture de l'appareil électronique (9) et après la lecture de l'appareil électronique (9), les données de l'appareil clé (2) sont transmises à la station clé (4),
**caractérisé en ce que**
la station clé est disposée à l'extérieur de la zone de sécurité et la station clé reçoit ledit au moins un appareil clé dans un logement, la station clé étant réalisée pour lire l'appareil clé et pour évaluer les données de l'appareil clé dans une unité d'évaluation, l'appareil clé ne peut être retiré de la station clé que par des personnes autorisées, la zone de sécurité ne doit pas être pénétrée par des personnes lorsque l'installation est active, l'installation ne pouvant pas être activée pendant que la personne porte l'appareil clé sur elle.

7. Procédé selon la revendication 6, **caractérisé en ce que** l'appareil clé (2) présente un appareil de lecture RFID (11) pour lire des signaux RFID de l'appareil électronique (9), l'appareil électronique (9) fournissant des signaux RFID.
